Europäisches Patentamt

(19) European Patent Office

Office européen des brevets

(11) EP 0 795 429 A2

(12) **EUROPEAN PATENT APPLICATION**

(43) Date of publication:
17.09.1997 Bulletin 1997/38

(51) Int. Cl.6: **B60G 17/015**

(21) Application number: 97103670.2

(22) Date of filing: 05.03.1997

(84) Designated Contracting States:
**DE FR GB**

(30) Priority: 15.03.1996 JP 59475/96

(71) Applicant: **UNISIA JECS CORPORATION
Atsugi-shi, Kanagawa 243 (JP)**

(72) Inventor: **Sasaki, Mitsuo
Atsugi-shi, Kanagawa 243 (JP)**

(74) Representative: **Weber, Joachim, Dr.
Hoefer, Schmitz, Weber
Patentanwälte
Ludwig-Ganghofer-Strasse 20
82031 Grünwald (DE)**

(54) **Apparatus and method for controlling damping force characteristic of vehicular shock absorber**

(57) In apparatus and method for controlling damping force characteristics for four vehicular shock absorbers, when a vehicular braking condition occurs, a corrective control signal component of a control signal V is generated and provided for each shock absorber in order to enable a shortening of a braking distance of the vehicle improving a vehicular braking performance. The corrective control signal component is generated on the basis of at least plus-to-minus inverted values of slip rates of respective road wheels, the slip rates W being derived according to subtractions of corresponding road wheel speeds $W_V$ ($W_{VFR}$, $W_{VFL}$, $W_{VRS}$) from a vehicle body speed. A basic control signal component of the control signal is generated and provided on the basis of sprung mass vertical velocity signals.

**FIG.2**

**Description**

**BACKGROUND OF THE INVENTION:**

The present invention relates to apparatus and method for optimally controlling damping force characteristics for vehicular shock absorbers.

Vehicular suspension control systems to perform controls for damping force characteristics for respective shock absorbers are exemplified by Japanese Patent Application First Publications No. Heisei 5-319051 and Heisei 5-229328.

In each of the disclosed vehicular suspension control systems, a low frequency wave component detected by the road wheel speed sensors is extracted and, when the extracted low frequency component exceeds a reference value, the damping force characteristic of each shock absorber is switched to a hard damping force characteristic.

In other words, in a vehicle in which an anti-skid control system is installed, a vehicular behavior is detected using the road wheel speed sensors and the damping force characteristic control is carried out on the basis of the vehicular behavior detected by the road wheel speed sensors. Consequently, a vehicular comfort and vehicular steering stability can be assured without using the vehicular behavior except the road wheel speed sensors.

However, although a provision of the road wheel speed sensors means an installation of the anti-skid control system in the vehicle, each of the disclosed vehicular suspension control system assures the vehicular comfort and steering stability on the basis of road wheel speed signals derived from the road wheel speed sensors.

Hence, each of the disclosed vehicular suspension control systems is not intended to improve a braking performance during an operation of the anti-skid control system (during the vehicular braking operation).

**SUMMARY OF THE INVENTION:**

It is, therefore, an object of the present invention to provide apparatus and method for controlling damping force characteristics for vehicular shock absorbers which can exhibit a vibration suppression effect on a sprung mass behavior based on a skyhook theorem when the vehicle is normally running with no braking operation and which can improve a braking performance through a suppression against a road wheel load variation during a braking operation effected to enable a shortening of a braking distance.

According to one aspect of the preset invention, there is provided with an apparatus for a vehicle, comprising: a) a plurality of shock absorbers, each being interposed between a vehicle body as a sprung mass and a corresponding one of front left and right and rear left and right road wheels as an unsprung mass and being so constructed and arranged as to provide a variably adjusted damping force characteristic for either one of extension or compression stroke phase of a piston member thereof according to a control signal and provide a relatively soft damping force characteristic for the other stroke phase of the piston member when the variably adjusted damping force characteristic is provided for the one of the extension or compression stroke phase of the piston member;

b) a plurality of road wheel speed sensors arranged for detecting road wheel speeds of respective road wheels;

c) a braking condition detector arranged for detecting whether a braking condition of the vehicle occurs;

d) a determinator arranged for determining sprung mass vertical velocities on the sprung mass at positions located adjacent to the front left and right and rear left and right road wheels;

e) a control unit, in response to sensor and determinator signals, for generating and providing a basic control signal component of the control signal for each shock absorber as the control signal on the basis of the sprung mass vertical velocities to variably adjust the damping force characteristic of either one of the extension or compression stroke phase of the piston member of the corresponding one of the shock absorbers, for deriving a vehicle body speed according to the respective road wheel speeds, for deriving slip rates of the respective road wheels according to the derived vehicle body and the respectively detected road wheel speeds, for controlling a braking liquid pressure of a vehicular braking system so as to converge the derived slip rate into a predetermined range, for deriving plus-to-minus inverted values of the slip rates according to the derived vehicle body speed and the derived respective road wheel speeds, and for generating and providing a corrective control signal component of the control signal effective when the vehicular braking condition occurs for each shock absorber on the basis of at least the derived plus-to-minus inverted values of the slip rates as the control signal to variably adjust the damping force characteristic for either one of the extension or compression stroke phase of the piston member thereof.

According to another aspect of the present invention, there is provided with a method for a vehicle, said vehicle having a plurality of shock absorbers, each being interposed between a vehicle body as a sprung mass and a corresponding one of front left and right and rear left and right road wheels as an unsprung mass and being so constructed and arranged as to provide a variably adjusted damping force characteristic for either one of extension or compression stroke phase of a piston member thereof according to a control signal and provide a relatively soft damping force characteristic for the other stroke phase of the piston member when the variably adjusted damping force characteristic is provided for the one of the extension or compression stroke phase of the piston member, said method comprising the steps of:

a) detecting road wheel speeds of the respective road wheels; b) detecting whether a braking condition of the vehicle occurs; c) deriving sprung mass vertical velocities on the sprung mass at positions located adjacent to the front left and right and rear left and right road wheels; d) generating a basic control signal component of the control signal for each shock absorber as the control signal on the basis of the sprung mass vertical velocities to variably adjust the damping force characteristic of either one of the extension or compression stroke phase of the piston member; e) determining a vehicle body speed according to the respective road wheel speeds; f) deriving a slip rate of at least one of the road wheels according to the determined vehicle body speed and the respectively detected road wheel speeds; g) controlling a braking liquid pressure of a vehicular braking cylinder so as to converge the derived slip rate into a predetermined range; h) deriving a plus-to-minus inverted value of the slip rate according to the determined vehicle body speed and the respective road wheel speeds; and i) generating a corrective control signal component of the control signal effective when the vehicular braking condition occurs for each shock absorber on the basis of the derived plus-to-minus inverted value of the slip rate as the control signal to variably adjust the damping force characteristic for either one of the extension or compression stroke phase of the piston member thereof.

## BRIEF DESCRIPTION OF THE DRAWINGS:

Fig. 1 is a generally perspective view of a vehicle to which a preferred embodiment of an apparatus for controlling damping force characteristics of vehicular shock absorbers according to the present invention is applicable.

Fig. 2 is a circuit block diagram of the damping force characteristic controlling apparatus in the preferred embodiment shown in Fig. 1.

Fig. 3 is partially vertical and horizontal cross sectional views of each of the shock absorbers shown in Figs. 1 and 2.

Fig. 4 is a partially cross sectional view of a main part of the representative one of the shock absorbers shown in Fig. 3.

Fig. 5 is a damping force characteristic graph representing a damping force with respect a piston speed in the representative one of the shock absorbers shown in Figs. 1 to 4.

Fig. 6 is a characteristic graph of an adjuster rotated in accordance with a stepwise rotation of a stepping motor associated with the adjuster in the representative one of the shock absorbers shown in Figs. 1 to 5.

Figs. 7A, 7B, and 7C are cross sectional views cut away along lines of K - K in Fig. 4.

Figs. 8A, 8B, and 8C are cross sectional views cut away along lines of L - L and M - M in Fig. 4.

Figs 9A, 9B, and 9C are cross sectional views cut way along a line of N - N in Fig. 4.

Fig. 10 is a characteristic graph of the damping force characteristic of the representative one of the shock absorbers when the shock absorber is on an HS region in which an extension phase is hard.

Fig. 11 is a characteristic graph of the damping force characteristic of the representative one of the shock absorbers when the shock absorber is on an SS region in which both of compression and extension phases are soft.

Fig. 12 is a characteristic graph of the damping force characteristic of the representative one of the shock absorbers when the shock absorber is on an SH region in which the compression phase is hard.

Fig. 13 is an operational flowchart executed in the damping force characteristic controlling apparatus in the embodiment shown in Figs. 1 and 2.

Figs. 14A, 14B, 14C, 14D, and 14E are timing charts of each signal at essential parts of the damping force characteristic controlling apparatus shown in Figs. 1 and 2.

Figs. 15A and 15B are integrally a signal processing circuit block diagram of the damping force characteristic controlling apparatus in the embodiment shown in Figs. 1 and 4.

Fig. 16 is another operational flowchart executed in the damping force characteristic controlling apparatus in the embodiment shown in Figs. 1 and 2.

Figs. 17A, 17B, 17C, 17D, and 17E are signal timing charts for explaining the operation in the damping force characteristic controlling apparatus shown in Figs. 1 and 2 especially explaining the contents of switching the slip rate gains during a normal running condition (no braking) and during the braking.

Fig. 18 is a characteristic graph representing simulation results of a braking distance with respect to an inputted read surface distance.

## BEST MODE FOR CARRYING OUT THE INVENTION:

Reference will hereinafter be made to the drawings in order to facilitate a better understanding of the present invention.

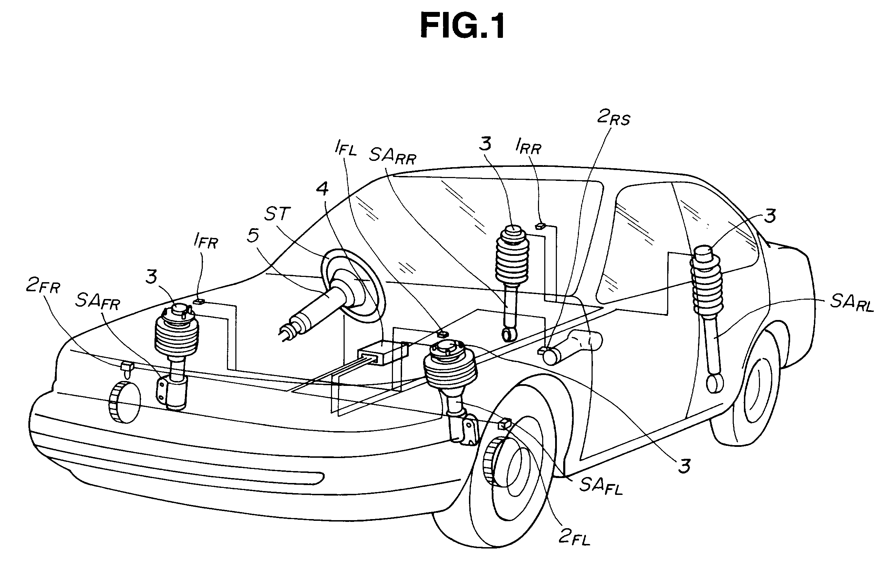

Fig. 1 shows an automotive vehicle to which an apparatus for controlling damping force characteristics for respective shock absorbers in a preferred embodiment according to the present invention is applicable.

In the embodiment, the automotive vehicle is, so-called, a forward-engine-rear-drive type vehicle (FR type).

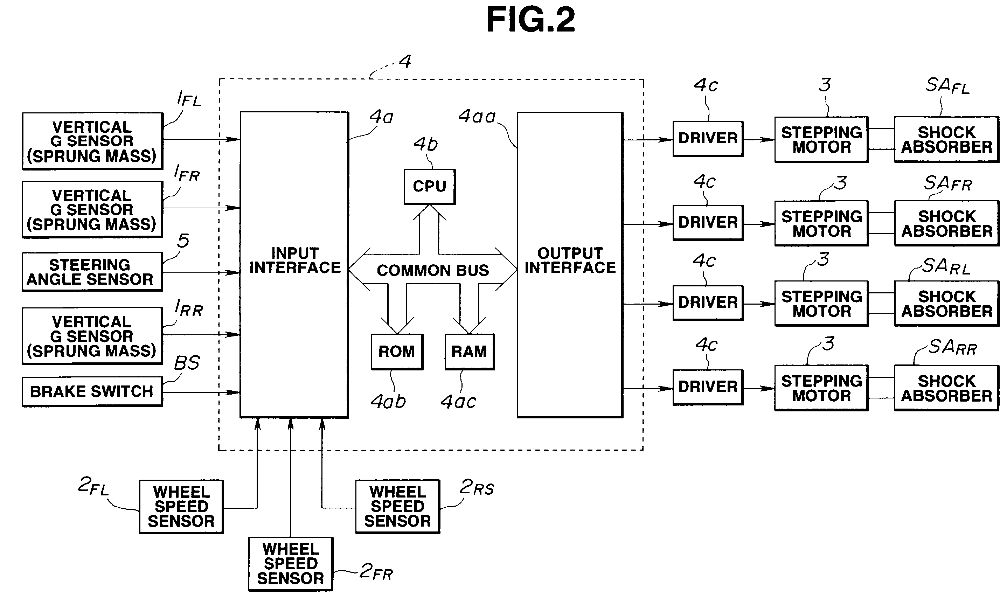

Fig. 2 shows a circuit block diagram of the damping force characteristic controlling apparatus in the preferred embodiment according to the present invention.

Each of four shock absorbers $SA_{FL}$, $SA_{FR}$, $SA_{RL}$, and $SA_{RR}$ is interposed between a vehicle body as a sprung mass and a corresponding one of front left and right road wheels and rear left and right road wheels as an unsprung mass.

It is noted that the representative one of the four shock absorbers is denoted merely by SA.

It is also noted that a subscript of FR denotes the front right road wheel, a subscript of FL denotes the front left road wheel, a subscript of RR denotes the rear right road wheel, and a subscript of RL denotes the rear left road wheel.

A plurality of sprung mass vertical acceleration sensors 1FL, 1FR, 1RR are disposed on given positions of the vehicle body adjacent to the respectively corresponding front left and right and rear right road wheels (vertical G sensors) to detect the sprung mass vertical accelerations at the front left and right and rear right road wheels (vertical G sensors in Fig. 2) to detect the sprung mass vertical accelerations at the front left and right and the rear right road wheel arranged positions of the vehicle body (positive (+) when each thereof is upward with respect to a road surface on which the vehicle is running and negative (-) when it is downward with respect thereto).

A steering angle sensor 5 is installed on a steering column of a steering system ST to detect a steering angle $\theta$. A brake switch BS is installed to detect a vehicular braking condition according to an accelerator pedal operation.

A control unit 4 is installed at a part of the vehicle body adjacent to a vehicular passenger seat for receiving signals derived from each of the vertical G sensors 1 ($1_{FL}$, $1_{FR}$, and $1_{RR}$), the road wheel speed sensors 2, the steering angle sensor 5, and the brake switch BS, and for outputting control signals V (as will be described later) to respective stepping motors 3 associated with respectively corresponding shock absorbers SA ($SA_{FL}$, $SA_{FR}$, $SA_{RL}$, and $SA_{RR}$) via corresponding drivers 4C.

The control unit 4 includes an input interface 4a, a CPU (Central Processing Unit) 4b, a common bus, ROM (Read Only Memory) 4ab, RAM (Random Access Memory) 4ac, and an output interface 4aa. The drivers 4c are interposed between the output interface 4aa and the respectively corresponding stepping motors 3 for receiving the control signals from the output interface 4aa and deriving drive signals to rotate the corresponding stepping motors 3 according to the contents of the control signals. It is noted that the drivers 4c are incorporated into the control unit 4 and the stepping motors 3 are installed on the respectively corresponding shock absorbers SA as will be described later. A signal processing circuit to generate the control signals V as will be described later.

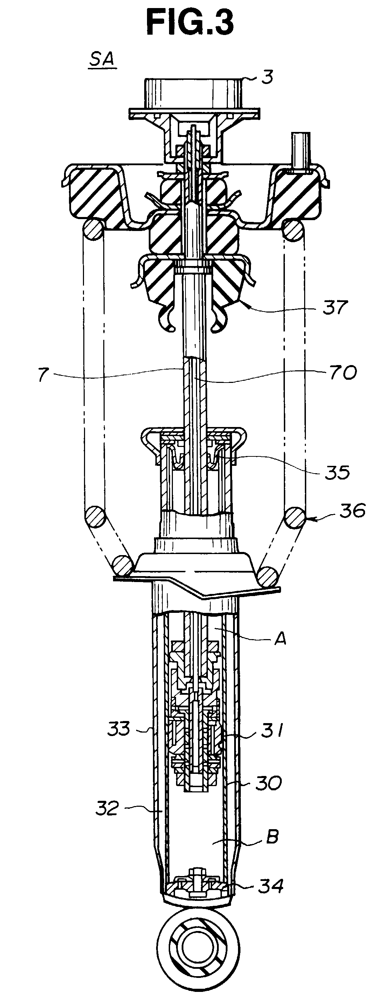

Fig. 3 shows the cross sectional views of the representative one of the shock absorbers SA.

In Fig. 3, each shock absorber used in the embodiment described above includes: a cylinder 30, a piston 31 defining an upper (portion) chamber A and a lower (portion) chamber B, an outer envelope 33 forming a reservoir chamber 32 on an outer periphery of the cylinder 30, a base 34 defining the lower chamber B and reservoir 32, a guide member 35 guiding a slide motion of the piston rod 7 linked to the piston 31, a suspension spring 36 interposed between the outer envelope 33 and the vehicle body, and a bumper rubber 37.

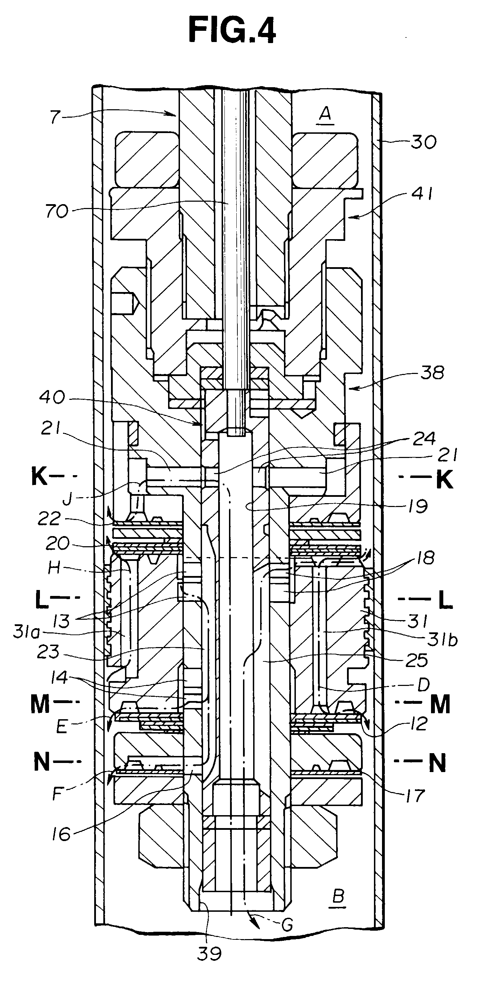

Fig. 4 shows an enlarged cross sectional view representing a part of the piston assembly 31 and its surrounding part of each of the shock absorbers SA.

As shown in Fig. 4. the piston 31 is formed with penetrating holes 31a and 31b therethrough. In addition, the piston 31 is provided with a compression (stroke) phase attenuation valve 20 and an extension (stroke) phase attenuation valve 12, both of the valves 20, 12 respectively opening and closing the respective penetrating holes 31a and 31b. A stud 38 is spirally meshed with and fixed to a bound stopper 41 spirally meshed with and fixed to a tip end of the piston rod 7.

The stud 38 is penetrated through the piston 31. In addition, the stud 38 is formed with a communication hole 39 so as to communicate with the upper portion chamber A and the lower portion chamber B. In the communication hole 39 forming flow passage (an extension phase second flow passage E, extension phase third flow passage F, bypass flow passage G, and compression phase second passage as will be described later). Then, the adjuster 40 which changes flow passage cross sectional areas of the above-described flow passage is provided within the communication hole 39.

Furthermore, an extension phase side check valve 17 and a compression phase side check valve 22 are also installed on an outer periphery of the stud 38, which enable and disable the fluid flow through the above-described flow passages formed by the communication hole 39 in accordance with a direction of the flow of the fluid. As shown in Fig. 3, the adjuster 40 is rotatable by means of the corresponding one of the actuators (stepping motors) 3 via the control rod 70.

It is noted that the stud 38 is formed with a first part 21, a second port 13, a third port 18, a fourth port 14, and fifth port 16, respectively, in an upper order (sequence).

On the other hand, referring to Fig. 4, the adjuster 40 is formed with a hollow portion 19, a first lateral hole 24, and a second lateral hole 25, both lateral holes communicating the internal and external portions of the adjuster 40. A longitudinal groove 23 is formed on an outer peripheral portion. Hence, four flow passages are formed between the upper portion chamber A and the lower portion chamber B as the fluid flow passages when the piston stroke indicates the extension phase: namely, 1) an extension phase first flow passage D such that the fluid passes the penetrating hole 31b, a valve opened internal side of the extension phase side attenuation valve 12, and reaches the lower portion chamber B; 2) an extension phase second flow passage E in which the fluid flows through the second port 13, the longitudinal groove 23, the fourth port 14, a valve opened outer peripheral side of the extension phase side attenuation valve 12, and reaches the lower portion chamber B; 3) an extension phase side third flow passage F in which the fluid passes through the third port 18, the second internal hole 25, and the hollow portion 19 and reaches the lower portion chamber B.

In addition, the three fluid flow passages through which the fluid can be caused to flow during the compression phase side of the piston 31 includes: 1) a compression phase (stroke phase) first flow passage H in which the fluid flows through the penetrating hole 31a and valve opened compression stroke side (phase) second flow passage J in which the hollow portion 19, the first lateral hole 24, the first port 21, and the opened compression phase (stroke phase) check valve 22 and reaches the upper portion chamber A; and 3) the bypass passage G in which the fluid flows through the hollow portion 19, the second lateral hole 25, and the third port 18.

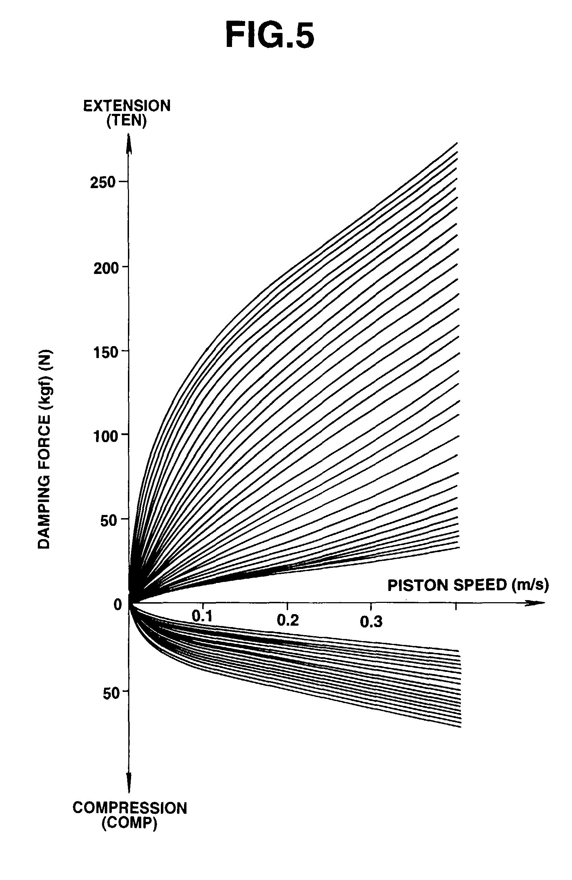

In summary, the shock absorber SA is so arranged and constructed as to be enabled to change the damping force characteristics at a multiple stage in its damping force characteristic, as shown in Fig. 5, either in the extension stroke phase or compression stroke phase when the adjuster 40 is pivoted according to the rotation of the corresponding one of the stepping motors 3.

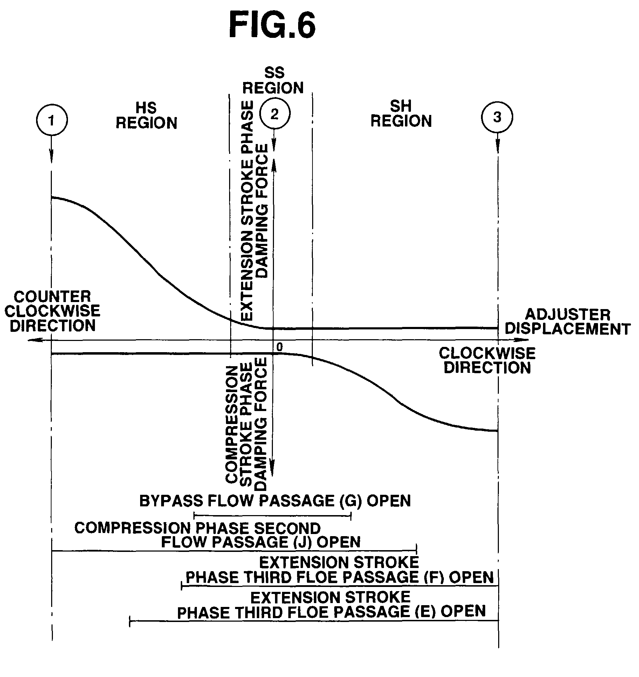

Fig. 6 shows relationships between the rotated position of the adjuster 40 and damping force characteristics at both of the extension (stroke) phase and compression (stroke) phase with respect to the piston 31.

In details, as shown in Fig. 6, when the adjuster 40 is pivoted in a given counterclockwise direction from a generally center position at which both of the extension and compression phases are in soft damping force characteristic positions (hereinafter, referred to as a soft region (soft control mode) SS), the damping force coefficient at the extension phase can be changed at the multiple stage from a maximum hard to a minimum hard characteristic but the compression stroke side is fixed at a soft position (hereinafter, referred to as an extension stroke side (phase) hard region HS). On the contrary, when the adjuster 40 is pivoted in a given clockwise direction therefrom, the damping force characteristic at the multiple stages and the damping force characteristic in the compression stroke side is fixed to the soft position (hereinafter, referred to as a compression hard region (compression phase hard) SH).

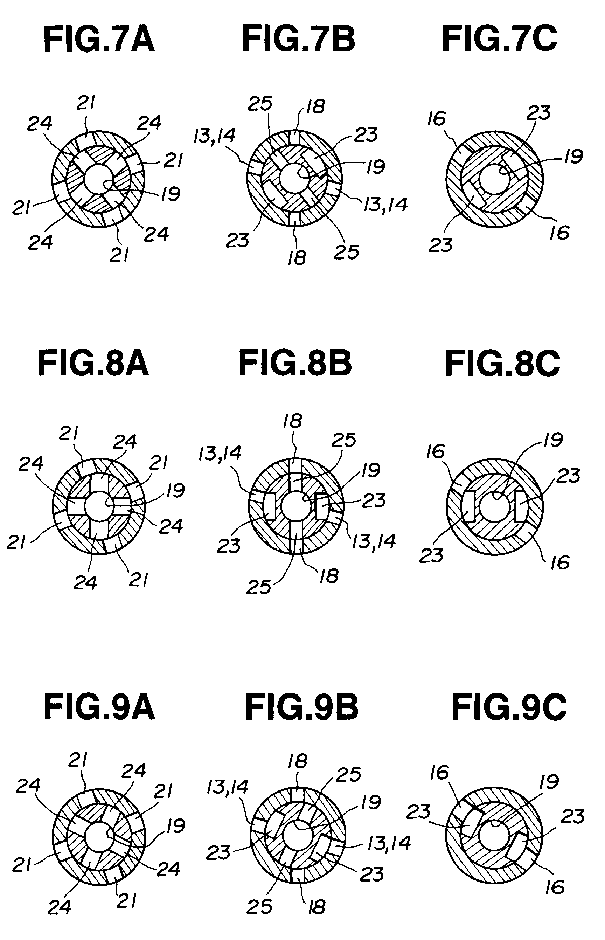

When, as shown in Fig. 6, the adjuster 40 is pivoted at any one of positions ①, ②, and ③, cross sections of the piston assembly portions cut away along lines K - K, L - L, M - M, and N - N of Fig. 4 are respectively shown in Figs. 7A (①), 7B (②), and 7 C (③) (K - K), 8A (①), 8B (②), and 8C (③) (L - L, M - M), 9A (①), 9B (②), and 9C (③) (N - N), respectively.

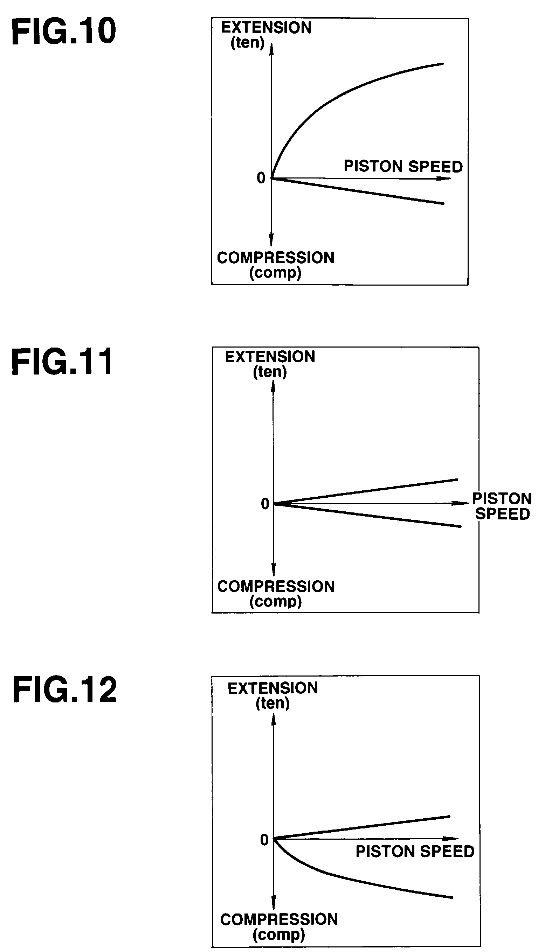

The damping force characteristics at the respective portions ①, ②, and ③ shown in Fig. 6 are shown in Figs. 10, 11, and 12, respectively.

Fig. 10 shows the damping force characteristic of the representative shock absorber SA when the adjuster 40 is positioned at ① of Fig. 6.

Fig. 11 shows that when the adjuster 40 is positioned at ② of Fig. 6.

Fig. 12 shows that when the adjuster 40 is positioned at ③ of Fig. 6.

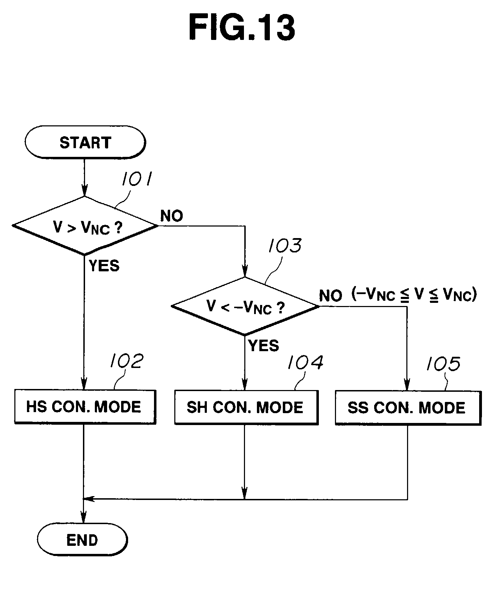

Next, a target damping force characteristic position P ($P_T$, $P_C$) for each shock absorber SA is calculated by the CPU 4b on the basis of an operational flowchart shown in Fig. 13.

At a step 101 of the flowchart in Fig. 13, the CPU 4b determines whether the control signal V ($V_{FR}$, $V_{FL}$, $V_{RR}$, $V_{RL}$) is positively in excess of a positive control dead zone $V_{NC}$.

The routine goes to a step 102 in which the CPU 4b is operated to control each shock absorber SA to an extension stroke phase hard region HS (opposite compression stroke phase is in a soft damping force characteristic) if the CPU determines that V > VNC at the step 101 (Yes) at the step 101. If the CPU 4b determines that V $\leq$ $V_{NC}$ at the step 101 (No), the routine goes to a step 103 in which the CPU 4b determines whether the control signal V is negatively in excess of a negative control dead zone $-V_{NC}$.

If Yes at the step 103, the routine goes to a step 104 in which the CPU 4b controls each shock absorber SA son as to provide a compression stroke phase hard region SH (opposite stroke phase is in the soft damping force characteristic).

If No at the step 103 ( $-V_{NC}$ $\leq$ V $\leq$ + $V_{NC}$), the routine goes to a step 105 in which the CPU 4b controls each shock absorber SA to both of the compression and extension stroke phases in SS mode (soft and soft).

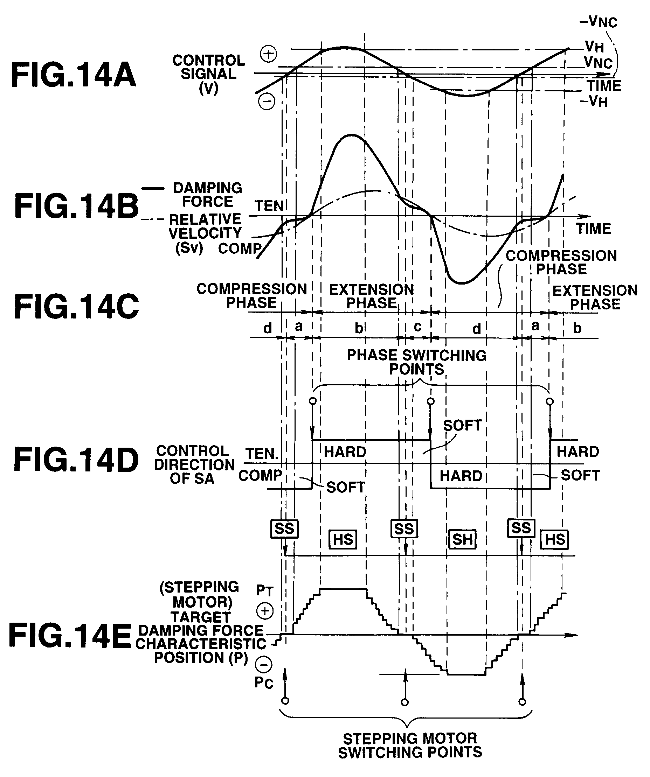

Figs. 14A through 14B show the respective signal (and variables) timing charts for explaining the damping force characteristic controlling operation in the embodiment shown in Figs. 1 and 2 when the representative control signal V is varied like a sin wave shown in Fig. 14A.

When a value of the control signal V falls within a range having an upper limit of the positive control dead zone and a lower limit of the negative control dead zone, both of the extension and compression stroke phases of the corresponding one of the shock absorbers SA are in the SS mode.

In addition, when the value of the control signal V is positively in excess of the positive control dead zone + $V_{NC}$, the extension stroke phase of the shock absorber SA is in a variably adjusted hard damping force extension and the compression stroke phase thereof is in the fixed soft one (HS region).

At this time, the damping force characteristic at the compression stroke phase ( = the target damping force characteristic effective position $P_T$) is varied in proportion to the value of the control signal V as follows:

$PT = \{(V - V_{NC})/(V_H - V_{NC})\}$ • Pmax-T --- (1), wherein Pmax-T denotes an extension stroke phase maximum damping force effective position and $V_H$ denotes a proportional range (constant).

In addition, while the value of the control signal V is negatively in excess of the negative control dead zone - $V_{NC}$, the compression stroke phase fixed to the soft damping force characteristic.

The damping force characteristic at the compression stroke phase ( = target damping force characteristic position $P_C$) is varied in proportion to the control signal V as follows:

$PC = \{(V - V_{NC})/(VH - V_{NC})\}$ • Pmax-C --- (2), wherein Pmax-C denotes a compression stroke phase maximum damping force characteristic effective position.

At timing charts of Fig. 14A through 14E, the region a denotes a state wherein the control signal V based on the sprung mass vertical velocity Vn is reversed from a negative value (upward) to a positive value (downward). At this time, since the relative velocity between the sprung mass and the unsprung mass indicates the negative region (the compression stroke phase toward which the shock absorber SA strokes) on the basis of the direction of the control signal V, the compression stroke phase which is the stroke of the shock absorber SA indicates the soft characteristic.

In addition, the region b indicates the region switched from the negative value to the positive value (extension stroke side toward which the shock absorber SA strokes) on the relative velocity between the sprung mass and the unsprung mass with the control signal V being left to indicate the positive value(upward). At this time, the shock absorber SA is controlled at the extension phase hard region HS on the basis of the direction of the control signal V. In addition, since the stroking phase of the shock absorber SA is also in the extension phase, hence, the extension stroking phase of the shock absorber SA indicates the hard characteristic in proportion to the value of the control signal V.

In addition, the region c is a state wherein the control signal V is reversed from the positive value (upward) to the negative value (downward). At this time, since the relative velocity between the sprung mass and unsprung mass indicates positive (extension phase side of the stroke of the shock absorber SA), the shock absorber SA is controlled to the compression phase hard region SH on the basis of the direction of the control signal V. Hence, at the region thereof, the compression phase side of the shock absorber SA indicates the hard characteristic in proportion to the value of the control signal V.

As described above, in the embodiment according to the present invention, when the sign of the control signal V and the sign of the relative velocity between the sprung mass and the unsprung mass are the same signs (region b and the region d), the stroking side of the shock absorber SA is controlled to the hard characteristic. When the signs described above are different (the region a and the region c) from each other, the instantaneous shock absorber SA falls in the soft characteristic. The same control as the damping force characteristic based on the Skyhook (control) theorem is carried out only by means of the control signal V.

In addition, when the stroking position of the shock absorber SA is switched, namely, the control is transferred from the region a to the region b, namely, from the region c to the region d (from the soft characteristic to the hard characteristic), the damping force characteristic position at the switching stroke side is already carried out at the regions a and c so that the switching from the soft characteristic to the hard characteristic can be carried out without delay in time.

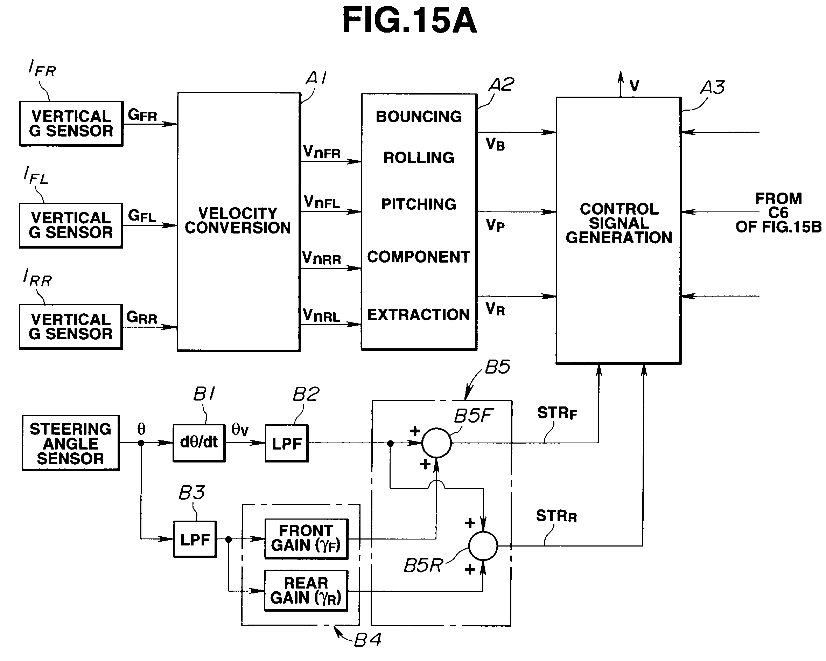

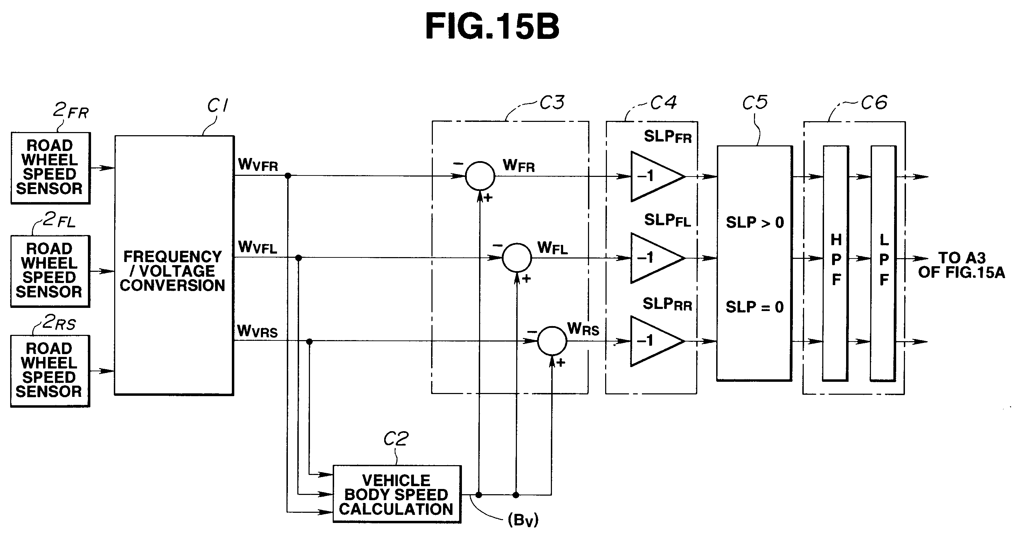

Figs. 15A and 15B show integrally the signal processing circuit representing a generation of the control signal V according to the received sensor signals and a hardware version of a program executed in the control unit 4.

At a block A1, a velocity conversion is carried out. Sprung mass vertical acceleration signals G ($G_{FR}$, $G_{FL}$, $G_{RR}$) derived from the respective vertical G sensors 1 ($1_{FR}$, $1_{FL}$, $1_{RR}$) derived from the respective vertical G sensors 1 ($1_{FR}$, $1_{FL}$, $1_{RR}$) are converted into corresponding sprung mass vertical velocities Vn ($Vn_{FR}$, $Vn_{FL}$, $Vn_{RR}$) through a high-pass filter used to integrate each sprung mass vertical acceleration signal and a band-pass filter having low-pass and high-pass filters used to eliminate frequency components other than a sprung mass resonance frequency band. It is noted that sprung mass vertical velocity signal VnRL on the sprung mass located at the rear left road wheel $_{RL}$ is derived at the block A1 through an estimation from the other sprung mass vertical velocity signals. At the next block A2, each of a bouncing component $V_B$, a pitching component $V_P$ and a rolling component $V_R$ is extracted from the sprung mass vertical velocity signals Vn ($Vn_{FL}$, $Vn_{FR}$, $Vn_{RL}$, $Vn_{RR}$).

Namely, the respective sprung mass vertical velocity signals $Vn_{FR}$, $Vn_{FL}$, $Vn_{RR}$, $Vn_{RL}$ constitute the bouncing components $V_B$ ($V_{BFR}$, $V_{BFL}$, $V_{BRL}$, $V_{BRR}$) at the respective road wheel positions, the pitching component $V_P$ is derived from a difference between the sprung mass vertical velocity signal $Vn_{FR}$ at the front right road wheel position and the sprung mass vertical velocity signal $Vn_{RR}$ at the rear right road wheel position (refer to an equation (3)). The rolling component $V_R$ is derived from a difference between the sprung mass vertical velocity signal $Vn_{FR}$ at the front right road wheel position and that $Vn_{FL}$ at the front left road wheel position (refer to an equation (4)).

In the embodiment, the pitching component $V_P$ is positive when indicating a vehicular squat direction and is negative when indicating a vehicular diving direction. The rolling component $V_R$ is positive when indicating a direction such that the vehicle body is inclined toward a leftward direction as viewed from a top of the vehicle and is negative when indicating a direction such that the vehicle body is inclined toward a right direction as viewed from the top of the vehicle.

$$V_P = Vn_{FR} - Vn_{RR} \qquad (3).$$

$$V_R = Vn_{FR} - Vn_{FL} \qquad (4).$$

On the other hand, at a block B1, a differentiation of a steering angular displacement signal $\theta$ derived from the steering angle sensor 5 is carried out (d $\theta$/dt) with time to derive a steering angular velocity $\theta$v. At the subsequent block B3, a low-pass filter LPF is used to process the steering angular velocity so that a rolling angle which is made coincident with a vehicular rolling angle in terms of a gain and phase is derived. At the subsequent block B4, gain adjustments are carried out to determine a synthesized ratio between rolling angle gains ($\gamma$f, $\gamma$r) at the front and rear road wheel sides.

At a block B5, the rolling angle formed by the blocks B3 and B4 is synthesized (added) with a roll rate formed by the blocks B1 and B2.

Consequently, a front road wheel (side) steering component $STR_F$ and a rear road wheel (side) steering component $STR_R$ are derived at the block B5 using two adders.

Each STR of the steering components $STR_F$ and $STR_R$ is positive in a rightward steering direction as viewed from a steering wheel of the vehicle and is negative in a leftward direction.

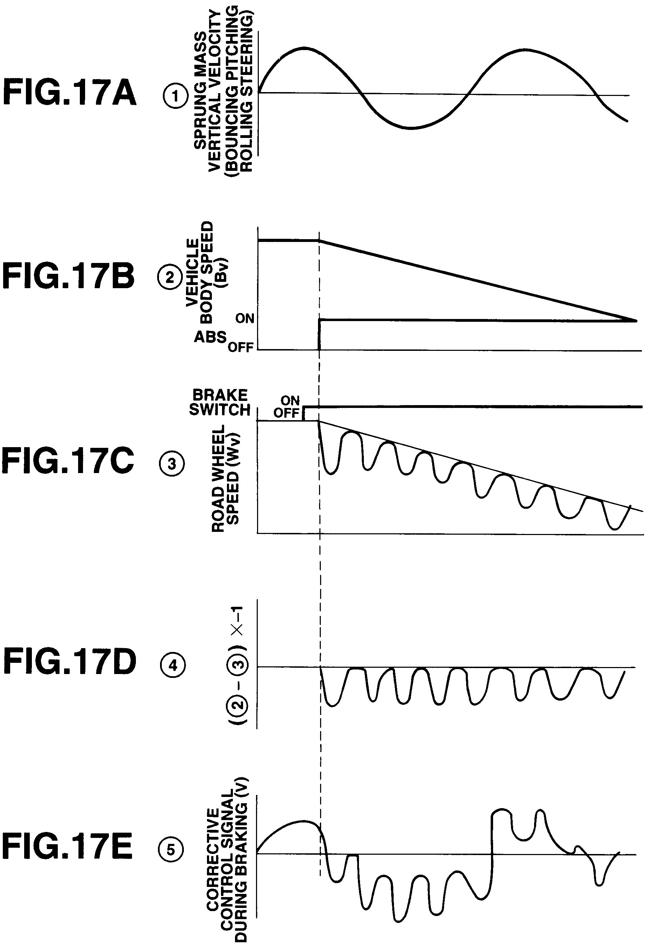

Referring to Fig. 15B, at a block C1 (frequency-to-voltage conversion), road wheel speed indicative pulse signals derived from respective road wheel sensors 2 (2FL, 2FR, 2RS) are converted into the front left and right and rear road wheel speeds W ($W_{VFL}$, $W_{VFR}$, $W_{VRS}$) (refer to Fig. 17C, ②). In the embodiment in the rear drive vehicle, the rear left and right road wheel speeds can be deemed to be the same and, therefore, the rear road wheel speed $W_{VRS}$ is representative of each rear left and right road wheel speed.

At a block C2, (vehicle body speed), a maximum value from among the signals of the respective road wheel velocities $W_V$ ($W_{VFL}$, $W_{VFR}$, $W_{VRS}$) is set to a (pseudo) vehicle body speed $B_V$ (refer to Fig. 17B, ② ).

At a block C3, slip rates W ($W_{FL}$, $W_{FR}$, $W_{RS}$) of the front left and right road wheels ($W = B_V - W_V$, $W_V = W_{VFL}$, $W_{VFR}$, $W_{VRS}$ ) are derived using respective subtractors.

At a block C4, as shown in Fig. 17D (④), each of the slip rates W ($W_{FL}$, $W_{FR}$, $W_{RS}$) is multiplied by minus one (-1) to convert the slip rates into negative slip rates SLP (SLP-$_{FL}$, SLP-$_{FR}$, SLP-$_{RR}$) (refer to Fig. 17, ④).

At a block C5, the CPU 4b determines whether each of the slip rates SLP (SLP-$_{FR}$, SLP-$_{FL}$, SLP-$_{RR}$) is set to zero.

That is to say, although every road wheel speed $W_V$ is not in excess of the vehicle body speed $B_V$ under the vehicular braking condition, such a case that each or any one of the rear road wheel speeds is in excess of the vehicle body speed $B_V$ should occur during, for example, a vehicular run over a concaved road surface. In this case, the corresponding one or more of the negative slip rates SLP (SLP-$_{FL}$, SLP-$_{FR}$, SLP-$_{RR}$) is forcefully changed to zero so that the negative slip rates SLP are always inhibited from indicating positive values.

The negative slip rates SLP (SLP-$_{FR}$, SLP-$_{FL}$, SLP-$_{RR}$) are, so-called, plus-to-minus inverted values of the slip rates W ($W_{FR}$, $W_{FL}$, $W_{RS}$).

At the next block C6, the plus-to-minus inverted values of the slip rates SLP are processed through a band-pass filter having a first-order high-pass filter (cutoff frequency is 0.5 Hz) and a first-order low-pass filter (cutoff frequency is 1.2 Hz).

At the subsequent block A3 (refer to Fig. 15A), the control signal in ($V_{FR}$, $V_{FL}$, $V_{RL}$, $V_{RR}$) used to control the damping force characteristics for the respective shock absorbers SA is generated.

$$V_{FR} = \alpha_f \cdot Vn_{FR} + \beta_f \cdot V_P + r_f \cdot V_R + \eta_f \cdot STR_F + \varepsilon_f \cdot SLP\text{-}_{FR}, \qquad (5)$$

$$V_{FL} = \alpha_f \cdot Vn_{FL} + \beta_f \cdot V_P - r_f \cdot V_R + \eta_f \cdot STR_F + \varepsilon_f \cdot SLP\text{-}_{FL}, \qquad (6)$$

$$V_{RR} = \alpha_r \cdot Vn_{RR} - \beta_r \cdot V_P + r_r \cdot V_R + \eta_r \cdot STR_R + \varepsilon_r \cdot SLP\text{-}_{RR}, \qquad (7)$$

$$V_{RL} = \alpha_r \cdot Vn_{RL} - \beta_r \cdot V_P - r_r \cdot V_R - \eta_r \cdot STR_R + \varepsilon_r \cdot SLP\text{-}_{RR}, \qquad (8)$$

In the equations (5) to (8), wherein $\alpha_f$ denotes a bouncing gain for the front road wheels, $\beta_f$ denotes a pitching gain for the front road wheels, $r_f$ denotes a rolling gain for the front road wheels, $\eta_f$ denotes a steering gain for the front road wheels, $\varepsilon_f$ denotes a slip rate gain for the front road wheels, $\alpha_r$ denotes the bouncing gain for the rear road wheels, $\beta_r$ denotes the pitching gain for the rear road wheels, $r_r$ denotes the rolling gain for the rear road wheels, $\eta_r$ denotes the steering gain for the rear road wheels, and $\varepsilon_r$ denotes the slip rate gain for the rear road wheels.

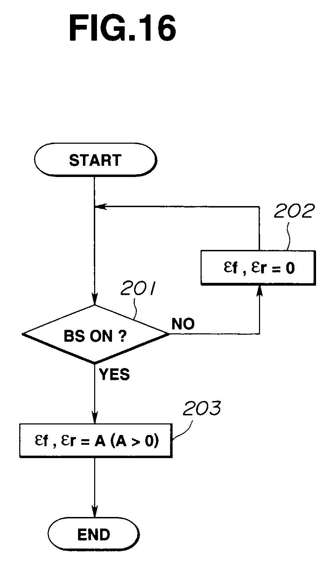

Next, Fig. 16 shows an operational flowchart executed in the control unit 4 to switch the slip rate gains ( $\varepsilon_f$, $\varepsilon_r$) for the front and rear road wheel arranged shock absorbers in the equations (5) through (8) according to whether the vehicle is normally running without brake or is being braked.

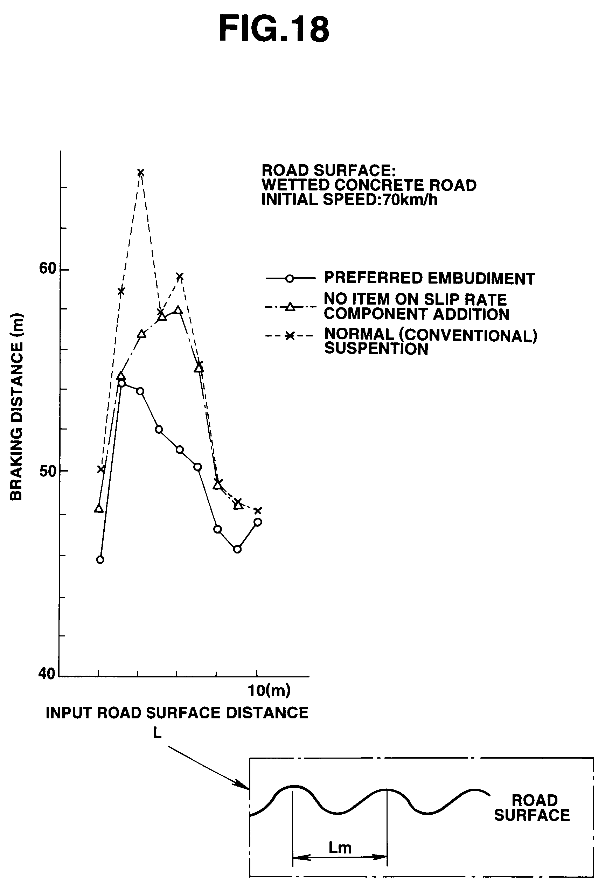

Figs. 18A through 18E show the timing charts of each signal in the damping force characteristic controlling apparatus in the preferred embodiment.

In Fig. 16, at a step 201, the CPU 4b determines whether the brake switch BS is turned to ON. That is to say, the CPU 4b determines whether the vehicular braking condition occurs.

If Yes (the vehicle is being braked) at the step 201, the routine goes to a step 203 in which the slip rate gains ( $\varepsilon_f$, $\varepsilon_r$) are set to respective predetermined values A (A > 0). Thereafter, the present routine is ended.

If No at the step 201 (the vehicle is normally running without braking operation), the routine goes to a step 202 in which both of the slip rate gains $\varepsilon_f$, $\varepsilon_r$ are set to zero so that an item (term) representing an addition of ($\varepsilon \cdot$ SLP) in the equations (5) to (8) is zeroed. At this time, the control signal V has only a basic control signal component except a corrective control signal component except a corrective control signal component. The above-described routine of Fig. 16 is repeated whenever a predetermined period of time is passed. Then, the basic control signal component as the control signal V on the basis of the bouncing, the pitching, the rolling, and the steering components is generated and provided to control the damping force characteristics of the respective shock absorbers (SA) on the basis of the Skyhook theorem described above.

Hence, a sufficient vibration suppression ability can be exhibited not only for the bouncing but also for the vehicular behavior on which the pitching and steady rolling are added. Thus, the vehicular comfort and steering stability during a normal straight running condition can be assured. In addition, a vehicular transient roll can sufficiently be suppressed when the steering operation is carried out and the steering stability during the steering operation can be assured.

In addition, while the vehicular braking condition occurs, the slip rate gains $\varepsilon_f$, $\varepsilon_r$ are set to the predetermined values A (A > 0). Hence, the values of the slip rate component addition terms ( $\varepsilon \cdot$ SLP) in the above-described equations (5) to (8) are set to the predetermined values in proportion to the negative slip rates SLP. Hence, the corrective control signal components effective during the braking condition to which the negative slip rate component SLP generated from the slip rates W are synthesized , as shown in Fig. 17E (⑤), in addition to the bouncing components $V_B$, the pitching components $V_P$ the rolling components $V_R$, and the steering components STR are used to control the damping force characteristics of the respective shock absorbers SA on the basis of the Skyhook theorem.

In details, during (while the slip rates are increased through the start of braking operation) an pressure increase stroke in a brake liquid pressure effected by means of an anti-skid control system, the damping force characteristics at the compression stroke phases of the respective shock absorbers SA are controlled to the hard damping force characteristics according to the corrective control signal components V to which the negative control signal components SLP are synthesized.

Hence, when the strokes of the shock absorbers SA are at the compression stroke phases, the compression stroke phase hard characteristic mode (SH) causes road wheel grounding forces on the road surface to be increased. On the other hand, when the strokes of the shock absorbers SA are at the extension stroke phases, the extension phase soft characteristic (compression phase hard characteristic) mode (SH) which are opposite phases to the extension stroke phase hard characteristic mode (HS) causes reductions of the road wheel grounding forces due to lifting up of the road wheels to be prevented.

Hence, a breaking distance can be shortened improving a braking performance due to a suppression against road wheel weight variations.

Furthermore, in a case where a low frequency input from the road surface is large in magnitude, during (the slip rates are decreased due to a release of the braking) a pressure decrease stroke in the brake liquid pressure by means of the anti-skid control system, the damping force characteristic control based on the Skyhook theorem, especially the extension stroke phase hard characteristic (HS) according to the values of the basic control signal components V based on the sprung mass vertical velocity signals, permits the suppression against upward behaviors of the sprung mass. Hence, the sprung mass behavior can be attenuated (vibration suppression). The vibration suppression of the sprung mass against the variation in the road wheel weight so that the braking performance can further be improved.

Fig. 18 shows results of simulations representing the vehicle braking distance with respect to an input road surface distance (L).

In Fig. 18, a solid line denotes plotted values in the case of simulation of the preferred embodiment of the damping force characteristic controlling apparatus, a dot-and-dash line denotes plotted values in the case of simulation when the basic control signal component was used with no use of the terms of $\varepsilon \cdot$ SLP (zeroes thereof) in the equations (5) to (9), and a dot line denotes plotted values in the case of simulation when a well known vehicular suspension control system except the damping controlling apparatus according to the present invention was installed in the vehicle. Each simulation condition is the same. It is appreciated from Fig. 18 that the braking distance was remarkably shortened.

In the preferred embodiment shown in Figs. 1, 2, 15A and 15B, the vertical G sensors 1 are disposed on the three separated locations on the vehicle body, i.e., located at the front left and right road wheel positions and the rear right positions and the remaining sprung mass vertical acceleration at the rear left road wheel position is estimated by a predetermined transfer function.

However, the number of the vertical G sensors to be installed may be arbitrary. For example, the vertical G sensors may be installed on the sprung mass at the four road wheel positions. Alternatively, only two vertical G sensors may be located at the front left and right road wheel positions and the sprung mass vertical accelerations at the rear left and right road wheels may be estimated using the respective predetermined transfer functions.

The above-described derivations of the remaining sprung mass vertical acceleration $G_{RL}$ and remaining vertical velocity signal $Vn_{RL}$ are exemplified by European Patent Application Publications No. EP 0 704 327 A2 published on April 3, 1996 (which corresponds to a formally allowed United States Patent Application Serial No. 08/536,745) and EP 0 672 548 A2 published on February 21, 1995 (which corresponds to a United States Patent Application Serial No. 08/394,296) (, the disclosures of which are herein incorporated by reference). The steering angle sensor is exemplified by a United States Patent No. 4,342,279 (issued on August 3, 1982, the disclosure of which is herein incorporated by reference).

Although, in the embodiment, the corrective control signal component in which the plus-to-minus inverted values of the slip rates are synthesized to the sprung mass vertical velocity signals at the block A3 are used during the occurrence of the vehicular braking condition, the plus-to-minus inverted values of the slip rates may solely be used to enable the shortening of the braking condition.

The brake switch BS is used as vehicular braking condition detector. However, the vehicular braking condition detector may include anti-skid controlled state detector which detects the braking condition according to an effect of the anti-skid control system, or a brake liquid pressure detector which detects the braking condition from the brake liquid pressure (in the brake system of the vehicle). The anti-skid control system is exemplified by a United States Patent No. 5,374,113 issued on December 20, 1994(, the disclosure of which is herein incorporated by reference).

It is noted that, in each of the alternative cases to the vehicular braking condition detector, the step 201 in the flowchart shown in Fig. 16 needs to have the content such that the CPU 4b determines whether the anti-skid control system is effected (turned to ON) or such that the CPU 4b determines whether the brake liquid pressure is equal to or above a predetermined pressure value or not.

## Claims

1. An apparatus for a vehicle, comprising:

   a) a plurality of shock absorbers, each being interposed between a vehicle body as a sprung mass and a corresponding one of front left and right and rear left and right road wheels as an unsprung mass and being so constructed and arranged as to provide a variably adjusted damping force characteristic for either one of extension or compression stroke phase of a piston member thereof according to a control signal and provide a relatively soft damping force characteristic for the other stroke phase of the piston member when the variably adjusted damping force characteristic is provided for the one of the extension or compression stroke phase of the piston member;
   b) a plurality of road wheel speed sensors arranged for detecting road wheel speeds of respective road wheels;
   c) a braking condition detector arranged for detecting whether a braking condition of the vehicle occurs;
   d) a determinator arranged for determining sprung mass vertical velocities on the sprung mass at positions located adjacent to the front left and right and rear left and right road wheels;
   e) a control unit, in response to sensor and determinator signals, for generating and providing a basic control signal component of the control signal for each shock absorber as the control signal on the basis of the sprung mass vertical velocities to variably adjust the damping force characteristic of either one of the extension or compression stroke phase of the piston member of the corresponding one of the shock absorbers, for deriving a vehicle body speed according to the respective road wheel speeds, for deriving slip rates of the respective road wheels according to the derived vehicle body and the respectively detected road wheel speeds, for controlling a braking liquid pressure of a vehicular braking system so as to converge the derived slip rate into a predetermined range, for deriving plus-to-minus inverted values of the slip rates according to the derived vehicle body speed and the derived respective road wheel speeds, and for generating and providing a corrective control signal component of the control signal effective when the vehicular braking condition occurs for each shock absorber on the basis of at least the derived plus-to-minus inverted values of the slip rates as the control signal to variably adjust the damping force characteristic for either one of the extension or compression stroke phase of the piston member thereof.

2. An apparatus for a vehicle as claimed in claim 1, wherein said control unit variably adjusts the damping force characteristic of each shock absorber at the extension stroke phase on the basis of the control signal when a direction discriminating sign of the control signal indicates upward with respect to a road surface on which the vehicle is running and variably adjusts the damping force characteristic of each shock absorber at the compression stroke phase on the basis of the control signal when the direction discriminating sign of the control signal is downward with respect to the road surface.

3. An apparatus for a vehicle as claimed in claim 2, wherein said control unit provides the control signal for each shock absorber, the control signal being synthesized with the basic control signal component and the corrective control signal component.

4. An apparatus for a vehicle as claimed in claim 3, wherein said detereminator includes sprung mass vertical acceleration sensors disposed on the positions of the vehicle body located adjacent to the front left and right road wheels and the rear right road wheel, respectively, and said control unit converts sprung mass vertical acceleration indicative signals of the sprung mass vertical acceleration sensors into the sprung mass vertical velocity signals located at the front left and right road wheels and the rear right road wheel and estimates the remaining sprung mass vertical velocity indicative signal at the position located adjacent to the rear left road wheel ($Vn_{FL}$, $Vn_{FR}$, $Vn_{RL}$, $Vn_{RR}$) through a transfer function, and wherein said control unit derives a bouncing component ($V_B$), a pitching component ($V_P$), and a rolling component ($V_R$) from said respective sprung mass vertical velocity indicative signals.

5. An apparatus for a vehicle as claimed in claim 4, which further comprises a steering angle sensor arranged for detecting a steering angle $\theta$ of a vehicular steering system and wherein said control unit derives steering components STR ($STR_F$, $STR_R$) for the front road wheels and for rear road wheels on the basis of the steering angle detected by the steering angle sensor.

6. An apparatus for a vehicle as claimed in claim 5, wherein said road wheel speed sensors output front left and right and rear road wheel speed indicative pulse train signals and said control unit derives the front left and right road wheel speed indicative signals ($W_{VFL}$, $W_{VFR}$, $W_{VRS}$) from the front left and right and rear road wheel speed indicative pulse train signals through a frequency-to-voltage conversions, respectively, and derives the vehicle body speed ($B_V$) from a maximum value of the front left and right and rear road wheel speeds ($W_{VFL}$, $W_{VFR}$, $W_{VRS}$).

7. An apparatus for a vehicle as claimed in claim 6, wherein said control unit derives the slip rates W ($W_{FL}$, $W_{FR}$, $W_{RS}$) of the front left and right and rear road wheels from respective subtractions of the respective front left and right and rear road wheel speeds from the vehicle body speed {W($W_{FL}$, $W_{FR}$, $W_{RS}$) = $B_V$ - $W_V$ ($W_{VFL}$, $W_{VFR}$, $W_{VRS}$) }, multiplies the respective slip rates W ($W_{FL}$, $W_{FR}$, $W_{RS}$) by -1 to derive negative slip rates SLP ($SLP\text{-}_{FL}$, $SLP\text{-}_{FR}$, $SLP\text{-}_{RS}$), determines whether each of the negative slip rates is equal to or less than zero or not so as to derive the plus-to-minus inverted values of the slip rates, and processes a band-pass filtering to eliminate unnecessary frequency components from the plus-to-minus inverted values of the slip rates.

8. An apparatus for a vehicle as claimed in claim 7, wherein said control unit generates and provides the control signal V ($V_{FR}$, $V_{FL}$, $V_{RR}$, $V_{RL}$) for each of the front right and left and rear right and left shock absorbers as follows:

$$V_{FR} = \alpha_f \cdot Vn_{FR} + \beta_f \cdot V_P + r_f \cdot V_R + \eta_f \cdot STR_F + \varepsilon_f \cdot SLP\text{-}_{FR},$$

$$V_{FL} = \alpha_f \cdot Vn_{FL} + \beta_f \cdot V_P - r_f \cdot V_R + \eta_f \cdot STR_F + \varepsilon_f \cdot SLP\text{-}_{FL},$$

$$V_{RR} = \alpha_r \cdot Vn_{RR} - \beta_r \cdot V_P + r_r \cdot V_R + \eta_r \cdot STR_R + \varepsilon_r \cdot SLP\text{-}_{RR},$$

$$V_{RL} = \alpha_r \cdot Vn_{RL} - \beta_r \cdot V_P - r_r \cdot V_R - \eta_r \cdot STR_R + \varepsilon_r \cdot SLP\text{-}_{RR},$$

wherein $\alpha_f$ denotes a bouncing gain for the front road wheels, $\beta_f$ denotes a pitching gain for the front road wheels, $r_f$ denotes a rolling gain for the front road wheels, $\eta_f$ denotes a steering gain for the front road wheels, $\varepsilon_f$ denotes a slip rate gain for the front road wheels, $\alpha_r$ denotes the bouncing gain for the rear road wheels, $\beta_r$ denotes the pitching gain for the rear road wheels, $r_r$ denotes the rolling gain for the rear road wheels, $\eta_r$ denotes the steering gain for the rear road wheels, and $\varepsilon_r$ denotes the slip rate gain for the rear road wheels.

9. An apparatus for a vehicle as claimed in claim 8, wherein said vehicular braking condition detector comprises a brake switch which is turned on when a vehicular braking system is operated.

10. An apparatus for a vehicle as claimed in claim 9, wherein said control unit sets the slip rate gains ( $\varepsilon_f$, $\varepsilon_r$) to predetermined values A (A > 0) to provide the corrective control signal component as the control signal for each shock absorber when the vehicular braking condition occurs which is detected by the brake switch and sets the slip rate gains to zero (0) to provide the basic control signal component as the control signal for each shock absorber when no vehicular braking condition occurs.

11. An apparatus for a vehicle as claimed in claim 10, wherein said control unit uses the value of any one of the slip rates W ($W_{FL}$, $W_{FR}$, $W_{RS}$) directly when determining that the corresponding one of the slip rates is equal to or less than zero and changes the value of any one of the slip rates W ($W_{FL}$, $W_{FR}$, $W_{RS}$) to zero when determining that the corresponding one of the slip rates exceeds zero.

12. A method for a vehicle, said vehicle having a plurality of shock absorbers, each being interposed between a vehicle body as a sprung mass and a corresponding one of front left and right and rear left and right road wheels as an unsprung mass and being so constructed and arranged as to provide a variably adjusted damping force characteristic for either one of extension or compression stroke phase of a piston member thereof according to a control signal and provide a relatively soft damping force characteristic for the other stroke phase of the piston member when the variably adjusted damping force characteristic is provided for the one of the extension or compression stroke phase of the piston member, said method comprising the steps of: a) detecting road wheel speeds of the respective road wheels; b) detecting whether a braking condition of the vehicle occurs; c) deriving sprung mass vertical velocities on the sprung mass at positions located adjacent to the front left and right and rear left and right road wheels; d) generating a basic control signal component of the control signal for each shock absorber as the control signal on the basis of the sprung mass vertical velocities to variably adjust the damping force characteristic of either one of the extension or compression stroke phase of the piston member; e) determining a vehicle body speed according to the respective road wheel speeds; f) deriving a slip rate of at least one of the road wheels according to the determined vehicle body speed and the respectively detected road wheel speeds; g) controlling a braking liquid pressure of a vehicular braking cylinder so as to converge the derived slip rate into a predetermined range; h) deriving a plus-to-minus inverted value of the slip rate according to the determined vehicle body speed and the respective road wheel speeds; and i) generating a corrective control signal component of the control signal effective when the vehicular braking condition occurs for each shock absorber on the basis of the derived plus-to-minus inverted value of the slip rate as the control signal to variably adjust the damping force characteristic for either one of the extension or compression stroke phase of the piston member thereof.

**FIG.1**

# FIG.2

VERTICAL G SENSOR (SPRUNG MASS) — $I_{FL}$

VERTICAL G SENSOR (SPRUNG MASS) — $I_{FR}$

STEERING ANGLE SENSOR — 5

VERTICAL G SENSOR (SPRUNG MASS) — $I_{RR}$

BRAKE SWITCH — BS

INPUT INTERFACE — 4a

CPU — 4b

COMMON BUS

ROM — 4ab

RAM — 4ac

OUTPUT INTERFACE — 4aa

4 — 4

DRIVER — 4c

STEPPING MOTOR — 3

SHOCK ABSORBER — $SA_{FL}$

DRIVER — 4c

STEPPING MOTOR — 3

SHOCK ABSORBER — $SA_{FR}$

DRIVER — 4c

STEPPING MOTOR — 3

SHOCK ABSORBER — $SA_{RL}$

DRIVER — 4c

STEPPING MOTOR — 3

SHOCK ABSORBER — $SA_{RR}$

WHEEL SPEED SENSOR — $2_{FL}$

WHEEL SPEED SENSOR — $2_{RS}$

WHEEL SPEED SENSOR — $2_{FR}$

EP 0 795 429 A2

# FIG.3

*SA*

# FIG.4

# FIG.5

# FIG.6

# FIG.7A

# FIG.7B

# FIG.7C

# FIG.8A

# FIG.8B

# FIG.8C

# FIG.9A

# FIG.9B

# FIG.9C

**FIG.10**

EXTENSION
(ten)

0

PISTON SPEED

COMPRESSION
(comp)

**FIG.11**

EXTENSION
(ten)

0

PISTON
SPEED

COMPRESSION
(comp)

**FIG.12**

EXTENSION
(ten)

0

PISTON SPEED

COMPRESSION
(comp)

# FIG.13

START

*101*

V > V$_{NC}$ ?  —NO→

YES

*103*

V < −V$_{NC}$ ?  —NO (−V$_{NC}$ ≦ V ≦ V$_{NC}$)→

YES

*102* | *104* | *105*

HS CON. MODE | SH CON. MODE | SS CON. MODE

END

FIG.14A

FIG.14B

FIG.14C

FIG.14D

FIG.14E

FIG.15A

# FIG.15B

# FIG.16

```
        ┌─────────────┐
        │    START    │
        └──────┬──────┘
               │
               ▼                         202
        ┌──────────────┐          ┌──────────────┐
        │              │←─────────│  εf , εr = 0 │
        │              │          └──────────────┘
        │         201  │                 ▲
        ▼              │    NO           │
      ◇ BS ON ? ◇ ─────────────────────┘
        │
        │ YES
        ▼                    203
  ┌──────────────────────┐
  │  εf , εr = A (A > 0)  │
  └──────────┬───────────┘
             │
             ▼
        ┌─────────┐
        │   END   │
        └─────────┘
```

**FIG.17A** ①

SPRUNG MASS
VERTICAL VELOCITY
(BOUNCING PITCHING
ROLLING STEERING)

**FIG.17B** ②

VEHICLE
BODY SPEED
(Bv)

ON
ABS OFF

**FIG.17C** ③

BRAKE
SWITCH

ON
OFF

ROAD WHEEL
SPEED (Wv)

**FIG.17D** ④

$(② - ③) \times -1$

**FIG.17E** ⑤

CORRECTIVE
CONTROL SIGNAL
DURING BRAKING (V)

# FIG.18

ROAD SURFACE:
WETTED CONCRETE ROAD
INITIAL SPEED:70km/h

BRAKING DISTANCE (m)

60

50

40

10(m)

INPUT ROAD SURFACE DISTANCE

L

ROAD
SURFACE

Lm

—o— PREFERRED EMBUDIMENT
—△—· NO ITEM ON SLIP RATE
COMPONENT ADDITION
--×-- NORMAL (CONVENTIONAL)
SUSPENTION